(19) Europäisches Patentamt
European Patent Office
Office européen des brevets

(11) EP 0 796 879 B1

(12) **EUROPÄISCHE PATENTSCHRIFT**

(45) Veröffentlichungstag und Bekanntmachung des Hinweises auf die Patenterteilung:
**29.08.2001 Patentblatt 2001/35**

(51) Int Cl.7: **C08F 283/08**, C08L 71/00, C08G 65/48, C08G 81/02, C08L 77/00

(21) Anmeldenummer: **97104544.8**

(22) Anmeldetag: **17.03.1997**

(54) **Pfropfcopolymerisate aus Polyarylenethern, Polyamiden und Copolymeren, die cyclische, alpha,beta-ungesättigte Dicarbonsäureanhydride einpolymerisiert enthalten**

Graft polymers of polyarylene ethers, polyamides and copolymers containing cyclic alpha, beta unsaturated dicarboxylic anhydrides

Polymères greffés d'éthers de polyarylène, polyamides et de copolymères contenant des anhydrides dicarboxyliques cycliques avec insaturation en alpha-bèta

(84) Benannte Vertragsstaaten:
**BE CH DE ES FR GB IT LI NL**

(30) Priorität: **18.03.1996 DE 19610572**

(43) Veröffentlichungstag der Anmeldung:
**24.09.1997 Patentblatt 1997/39**

(73) Patentinhaber: **BASF AKTIENGESELLSCHAFT**
**67056 Ludwigshafen (DE)**

(72) Erfinder:
- **Weber, Martin, Dr.**
  **67487 Maikammer (DE)**
- **Güntherberg, Norbert, Dr.**
  **67346 Speyer (DE)**

(74) Vertreter: **Kinzebach, Werner, Dr. et al**
**Patent Attorneys,**
**Reitstötter, Kinzebach & Partner,**
**Sternwartstrasse 4**
**81679 München (DE)**

(56) Entgegenhaltungen:
**EP-A- 0 440 939**
**EP-A- 0 475 039**
**US-A- 4 387 189**
**US-A- 5 457 169**

EP 0 796 879 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die vorliegende Erfindung betrifft Pfropfcopolymerisate, erhältlich durch Umsetzung von Polyarylenethern, Polyamiden und Copolymeren, welche cyclische, $\alpha,\beta$-ungesättigte Dicarbonsäureanhydride einpolymerisiert enthalten.

Für die Herstellung von Haushaltsgeräten und medizinischen Geräten sowie für den Einsatz im Elektro- oder Elektronikbereich sind Formmassen erwünscht, die neben hoher Wärmeformbeständigkeit, guter Verarbeitbarkeit auch gute Dauergebrauchsbeständigkeit aufweisen. Diese Eigenschaften können prinzipiell durch Mischen von Polyarylenethern und Polyamiden eingestellt werden. Derartige Polymermischungen (Blends) vereinigen nämlich in sich die positiven Eigenschaften der Polyamide (leichte Verarbeitbarkeit, hohe Widerstandsfähigkeit gegenüber Chemikalien) und der Polyarylenether (hohe Temperaturstabilität, hohe Wärmeformbeständigkeit, geringe Neigung zur Wasseraufnahme). So beschreibt die US 3,729,527 Mischungen aus Polyarylethersulfonen und Polyamiden, die eine bessere Knickfestigkeit und Fließfähigkeit aufweisen. Bessere Eigenschaften weisen die in der DE-A-4121705 beschriebenen Blends auf, die als Polyamidkomponente teilkristalline, teilaromatische Polyamide enthalten. Aufgrund ihres Eigenschaftsprofils finden diese Blends als hochtemperaturbeständige Formmassen für medizinisch technische Geräte, Haushaltsgeräte oder im Elektronikbereich Verwendung.

Aufgrund häufig auftretender Unverträglichkeit dieser Komponenten (fehlende Wechselwirkung der unterschiedlichen Kettensegmente) kann es jedoch zur Phasentrennung kommen. Die Phasenstruktur solcher Blends ist daher sehr stark von den Verarbeitungsbedingungen abhängig, was zu uneinheitlichen mechanischen Eigenschaften innerhalb eines Formteils führen kann. Außerdem stellt die Phasengrenze in unverträglichen Polymerblends eine Schwachstelle dar, weshalb insbesondere die Zähigkeit solcher Materialien meist nicht zufriedenstellend ist. Diese Problematik kann im Prinzip durch geeignete Verträglichkeitsvermittler gelöst werden (D.R. Paul, in "Polymerblends", D.R. Paul, S.P. Newman, Hrsg., Academic Press, New York, 1978, Bd.II, S. 35 f.). Aufgabe der Verträglichkeitsvermittler ist dabei, die Grenzflächenspannung zwischen den unverträglichen Komponenten zu reduzieren, um eine bessere Verteilung der dispersen Phase in der Matrixphase zu erreichen. Desweiteren muß der Verträglichkeitsvermittler eine Wechselwirkung zwischen den unverträglichen Phasen bewirken, damit im Belastungsfall ein effektiver Spannungstransfer über die Phasengrenzfläche hinweg möglich ist.

Verträglichkeitsvermittler für Polymerblends auf Polyarylenetherbasis lassen sich beispielsweise herstellen durch Umsetzung von Polyarylenethern, die Hydroxy-, Amino- oder Epoxyendgruppen aufweisen, mit Copolymeren, die Anhydridgruppen enthalten (DE-A 4332542).

Geeignete Verträglichkeitsvermittler für Mischungen aus Polyarylenethern und Polyamid sind Blockcopolymere aus Polysulfon- und Polyamideinheiten. Solche Blockcopolymere sind bekannt und in mehreren Arbeiten beschrieben (siehe J.E. McGrath, L.M. Robeson, M. Matzner, Polym. Prep. 14, 1032 (1973); EP-A 374 988; C.E. Korning, R. Fayt, W. Bruls, L.v.D. Vondervoort, T. Rauch, P. Teyssié, Macromol. Chem., Macromol. Symp. 75, 159-166, 1993). Die Synthese der beschriebenen Blockcopolymere ist jedoch sehr aufwendig, so daß es nicht an Versuchen gefehlt hat, andere geeignete Verträglichkeitsvermittler zu finden. Die DE-A-3617501 beschreibt Mischungen aus Polyamiden und Polyarylenethern, die als Verträglichkeitsvermittler eine polymere Komponente mit Hydroxylgruppen, z.B. Polymere auf Basis von Bisphenol A und Epichlorhydrin, enthalten. Aufgrund der niedrigen Glastemperatur des verwendeten Verträglichkeitsvermittlers von 100°C ist jedoch die Wärmeformbeständigkeit dieser Blends eingeschränkt.

Die DE-A 4306708 beschreibt Formmassen, die Polyarylenether mit Anhydridendgruppen zusammen mit Polyamiden enthält. Diese Formmassen eignen sich zur Herstellung von Formteilen, die hohen mechanischen Belastungen oder chemischen Einflüssen ausgesetzt sind. Sie erfüllen die eingangs erwähnten Anforderungen nur teilweise.

Aufgabe der vorliegenden Erfindung war die Bereitstellung eines leicht zugänglichen Verträglichkeitsvermittlers für Polymerblends auf Basis von Polyarylenethern und Polyamiden, der die Herstellung von Polymerblends mit verbesserter Wärmeformbeständigkeit ) ermöglicht. Der Erfindung lag weiterhin die Aufgabe zugrunde, Formmassen auf Basis von Polyarylethern und Polyamiden zur Verfügung zu stellen, die neben einer hohen Wärmeformbeständigkeit eine gute Verarbeitbarkeit und eine hohe Dauergebrauchsbeständigkeit aufweisen.

Diese Aufgaben konnten dadurch gelöst werden, daß man Pfropfcopolymerisate einsetzt, die erhältlich sind durch Umsetzung von

A) 5 bis 85 Gew.-% wenigstens eines Polyarylenethers mit mindestens 30% reaktiven Endgruppen, die in der Lage sind, mit den funktionellen Gruppen der Komponente C zu reagieren,
B) 5 bis 85 Gew.-% wenigstens eines thermoplastischen Polyamids,
C) 10 bis 90 Gew.-% wenigstens eines Copolymers, das aufgebaut ist aus

$C_1$) mindestens einer aromatischen Vinylverbindung,
$c_2$) mindestens einem cyclischen, $\alpha,\beta$-ungesättigten Dicarbonsäureanhydrid,

$c_3$) mindestens einem cyclischen, α,β-ungesättigten Dicarbonsäureimid,

$c_4$) gegebenenfalls mindestens einem weiteren, mit $c_1$ bis $c_3$ copolymerisierbaren Monomeren.

Die vorliegende Erfindung betrifft weiterhin Formmassen, die die erfindungsgemäßen Pfropfcopolymerisate enthalten.

Außerdem betrifft die Erfindung die Verwendung der Pfropfcopolymerisate zur Herstellung von hochtemperaturbeständigen Fasern, Folien oder Formteilen.

Die erfindungsgemäßen Pfropfcopolymerisate enthalten als Komponente A 5 bis 85 Gew.-%, vorzugsweise 10 bis 75 Gew.-% wenigstens eines Polyarylenethers mit reaktiven Endgruppen. Die erfindungsgemäß verwendeten Polyarylenether enthalten wiederkehrende Einheiten der allgemeinen Formel I

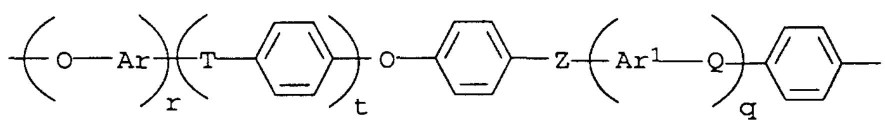

(I),

worin r, t und q unabhängig voneinander jeweils für 0, 1, 2 oder 3 stehen. T, Q und Z können gleich oder verschieden sein und jeweils eine chemische Bindung oder eine Gruppe, ausgewählt unter -O-, -S-, $-SO_2-$, S=O, C=O, -N=N-, $-R^aC=CR^b-$ und $-CR^cR^d-$, bedeuten, mit der Maßgabe, daß mindestens eine der Gruppen T, Q oder Z für $-SO_2-$ oder C=O steht. $R^a$ und $R^b$ stehen unabhängig voneinander für Wasserstoff oder für $C_1$-$C_{10}$-Alkylgruppen. $R^c$ und $R^d$ stehen unabhängig voneinander für Wasserstoff, $C_1$-$C_{10}$-Alkylgruppen, $C_1$-$C_{10}$-Alkoxy wie Methoxy, Ethoxy, n-Propoxy, i-Propoxy, n-Butoxy oder $C_6$-$C_{18}$-Arylgruppen, die gegebenenfalls $C_1$-$C_4$-Alkylsubstituenten aufweisen, wie Phenyl, Tolyl oder Naphthyl. Beispiele für $C_1$-$C_{10}$-Alkylgruppen sind Methyl, Ethyl, n-Propyl, i-Propyl, n-Butyl, t-Butyl, n-Hexyl. $R^c$ und $R^d$ können aber auch zu einem cycloaliphatischen Ring verknüpft sein. In diesem Fall steht $-CR^cR^d-$ bevorzugt für eine Cyclopentyl- oder Cyclohexylgruppe. Diese cycloaliphatischen Ringe können ihrerseits mit einem oder mehreren Alkylresten, bevorzugt Methyl, substituiert sein. Vorzugsweise stehen die Gruppen T, Q und Z für -O-, $-SO_2-$, C=O, eine chemische Bindung oder eine Gruppe der Formel $-CR^cR^d-$. Bevorzugte Reste für $R^c$ und $R^d$ sind Wasserstoff und Methyl. Ar und $Ar^1$ stehen für $C_6$-$C_{18}$-Arylengruppen, wie 1,5-Naphthylen, 1,6-Naphthylen, 2,7-Naphthylen, 1,5-Anthrylen, 9,10-Anthrylen, 2,6-Anthrylen, 2,7-Anthrylen oder Biphenylen, insbesondere Phenylen, vorzugsweise p-Phenylen. Diese Arylengruppen weisen vorzugsweise keine Substituenten auf. Sie können jedoch als Substituenten $C_1$-$C_{10}$-Alkylgruppen wie Methyl, Ethyl, n-Propyl, i-Propyl, t-Butyl, n-Hexyl, $C_6$-$C_{18}$-Arylgruppen wie Phenyl oder Naphthyl, $C_1$-$C_{10}$-Alkoxyreste wie Methoxy, Ethoxy, n-Propoxy, i-Propoxy, n-Butoxy und/ oder Halogenatome aufweisen. Bevorzugte Substituenten sind Methyl, Phenyl, Methoxy und/oder Chlor.

Einige geeignete wiederkehrende Einheiten der allgemeinen Formel I sind im folgenden aufgeführt:

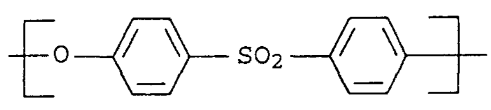

($I_1$)

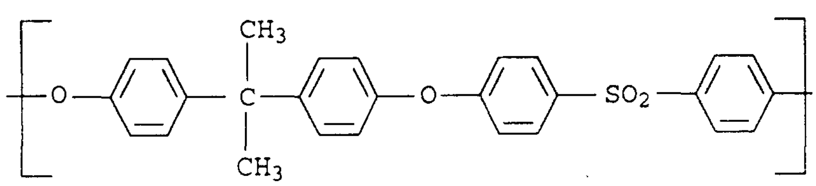

($I_2$)

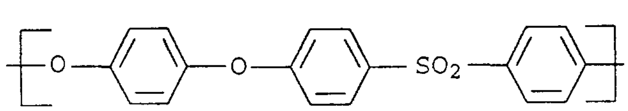

($I_3$)

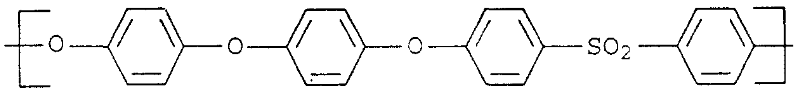

I$_4$)

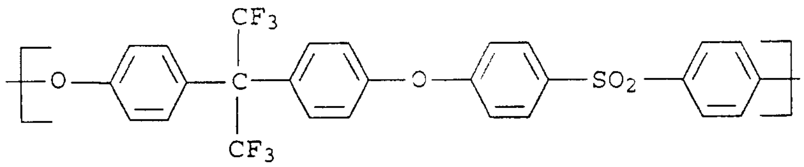

I$_5$)

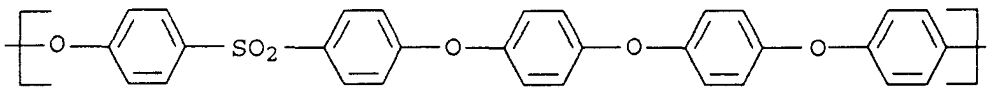

(I$_6$)

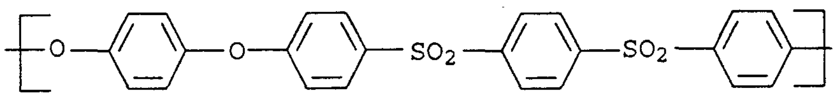

(I$_7$)

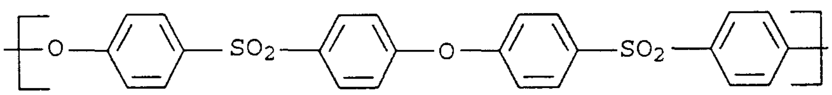

(I$_8$)

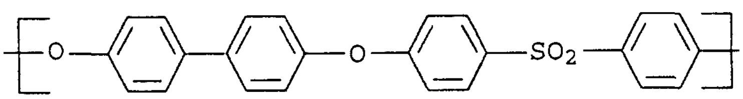

(I$_9$)

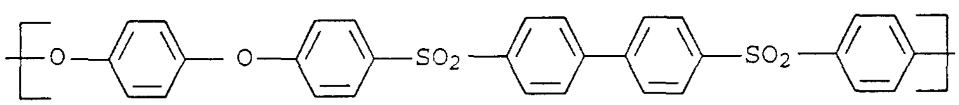

I$_{10}$)

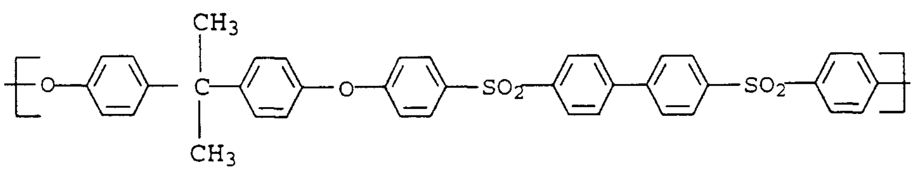

(I$_{11}$)

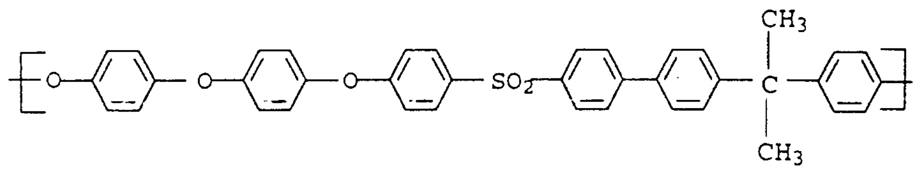

(I12)

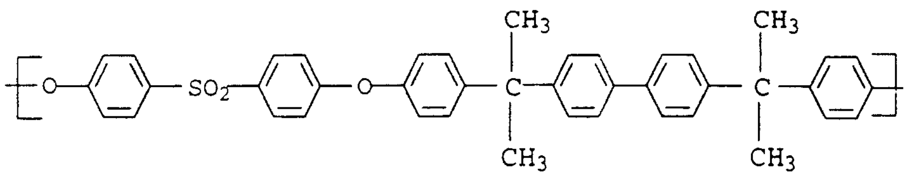

(I13)

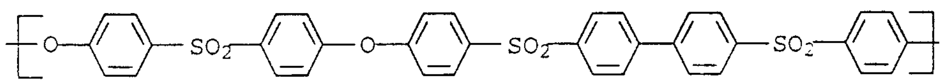

(I14)

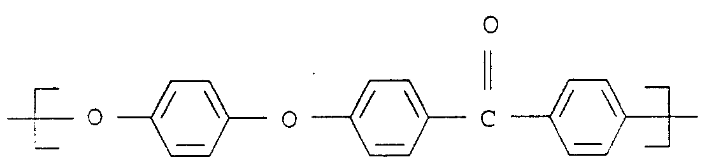

(I15)

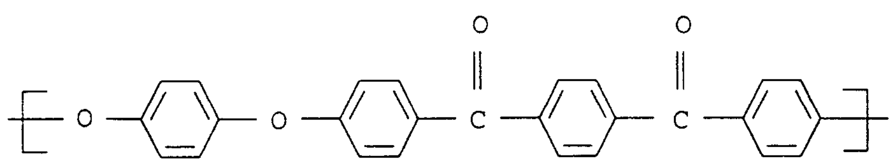

(I16)

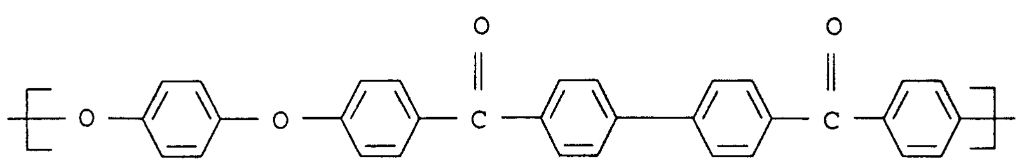

(I17)

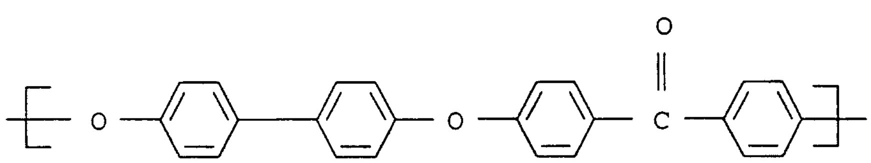

(I18)

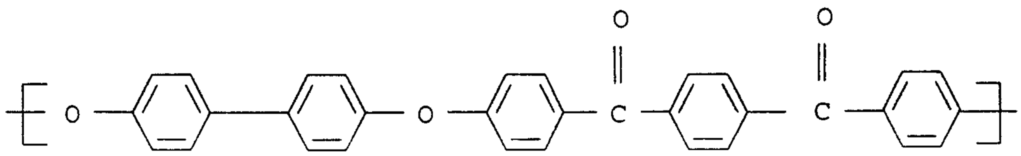
$(I_{19})$

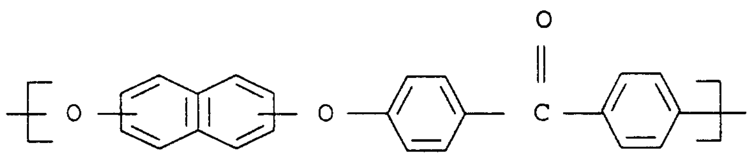
$(I_{20})$

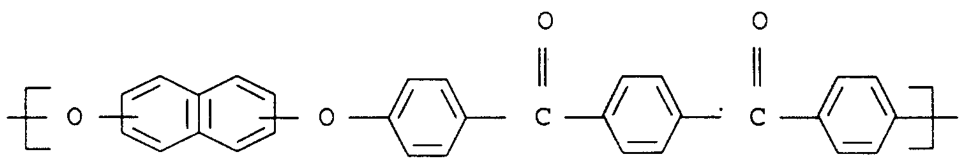
$(I_{21})$

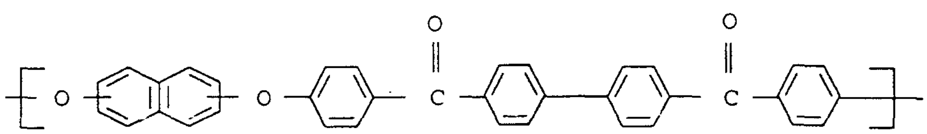
$(I_{22})$

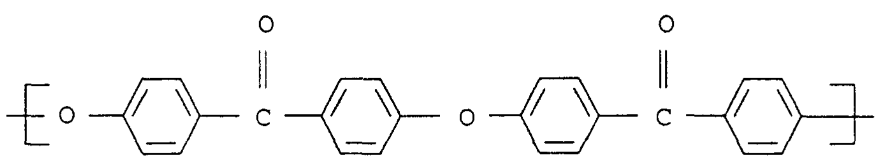
$(I_{23})$

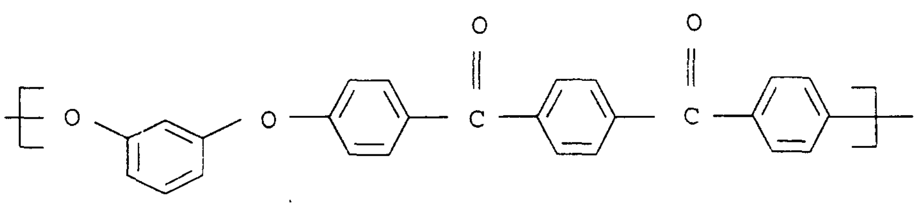
$(I_{24})$

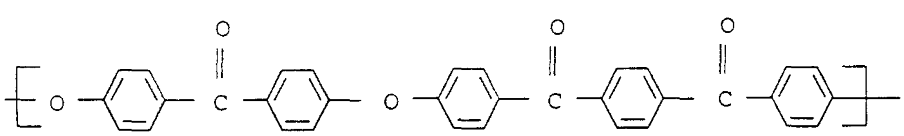
$(I_{25})$

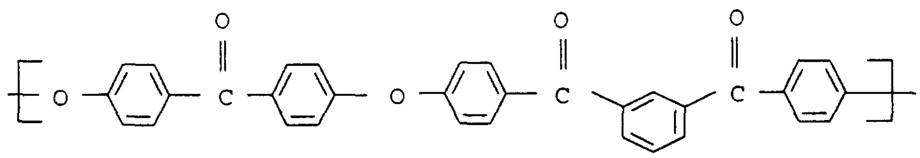 $(I_{26})$

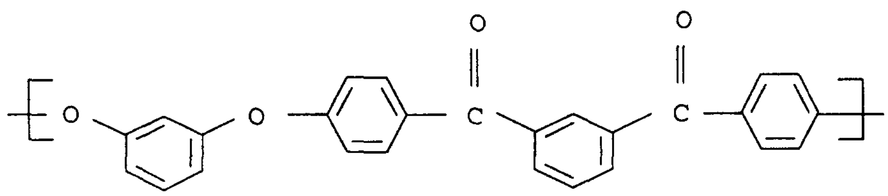 $(I_{27})$

Besonders bevorzugte Arylenether A weisen die wiederkehrenden Einheiten $I_1$, $I_2$, $I_{25}$ oder $I_{26}$ auf. Dazu zählen bevorzugt Arylenether, die 3 bis 97 Mol-%, insbesondere 5 bis 95 Mol-% wiederkehrend Einheiten $I_1$ und 3 bis 97, insbesondere 5 bis 95 Mol-% wiederkehrende Einheiten $I_2$ aufweisen. Die Viskositätszahl der erfindungsgemäß verwendeten Polyarylenether liegt im Bereich von 13 bis 95 $cm^3/g$, entsprechend einem mittleren Molekulargewicht $M_n$ (Zahlenmittel) im Bereich von 1500 bis 60000 g/mol. Die relativen Viskositätszahlen werden je nach Löslichkeit anhand 1 Gew.-%iger Lösungen der Polyarylenether in N-Methylpyrrolidon, in Mischungen aus Phenol und Dichlorbenzol oder in 96%iger Schwefelsäure bei jeweils 20°C bzw. 25°C bestimmt.

Die Polyarylenether sind an sich bekannt und können nach bekannten Methoden hergestellt werden.

Sie entstehen z.B. durch Kondensation aromatischer Bishalogenverbindungen mit den Alkalidoppelsalzen aromatischer Bisphenole. Sie können beispielsweise auch durch Selbstkondensation von Alkalisalzen aromatischer Halogenphenole in Gegenwart eines Katalysators hergestellt werden. Der DE-A-38 43 438 ist beispielsweise eine ausführliche Zusammenstellung geeigneter Monomere zu entnehmen. Geeignete Verfahren werden unter anderem in der US 3 441 538, US 4 108 837, der DE-A 27 38 962 beschrieben. Polyarylenether, die Carbonylfunktionen enthalten, sind auch durch elektrophile (Friedel-Crafts)-Polykondensation zugänglich, wie unter anderem in der WO 84/03892 beschrieben. Bei der elektrophilen Polykondensation werden zur Bildung der Carbonylbrücken entweder Dicarbonsäurechloride oder Phosgen mit Aromaten, welche zwei, durch elektrophile Substituenten austauschbare Wasserstoffatome enthalten, umgesetzt. Auch kann ein aromatisches Carbonsäurechlorid, das sowohl eine Säurechloridgruppe als auch ein substituierbares Wasserstoffatom enthält, mit sich selbst polykondensiert werden.

Bevorzugte Verfahrensbedingungen zur Synthese von Polyarylenethern sind beispielsweise in den EP-A 113 112 und EP-A 135 130 beschrieben. Besonders geeignet ist die Umsetzung der Monomere in aprotischen Lösungsmitteln, insbesondere N-Methylpyrrolidon, in Gegenwart von wasserfreiem Alkalicarbonat, insbesondere Kaliumcarbonat. Es hat sich in vielen Fällen ebenso als vorteilhaft erwiesen, die Monomere in der Schmelze umzusetzen.

Je nach den gewählten Synthesebedingungen können die Polyarylenether unterschiedliche Endgruppen aufweisen. Mindestens 30% der Endgruppen muß in der Lage sein mit den Anhydridgruppen der Komponente C zu reagieren und stabile Bindungen zu bilden (reaktive Endgruppen). Bevorzugte reaktive Endgruppen sind Amino-, Hydroxy- und Epoxyendgruppen.

Polyarylenether mit einer reaktiven Endgruppe pro Kette sind bevorzugt. Die verbleibenden Endgruppen sind inert. Inerte Endgruppen sind Halogenatome, insbesondere Chlor, Alkoxy-, vor allem Methoxy- oder Ethoxy-, Aryloxy-, bevorzugt Phenoxy- oder Benzyloxygruppen.

Die Synthese hydroxyterminierter Polyarylenether ist beispielsweise durch geeignete Wahl des stöchiometrischen Verhältnisses von Dihydroxy- und Dihalogenmonomeren möglich (siehe z.B. H.-G. Elias, "Makromoleküle" 4. Aufl., Hüthig & Wepf Verlag, Basel 1981, Seite 491). Polyarylenether mit Epoxidendgruppen sind z.B. ausgehend von Polyarylenethern mit Hydroxyendgruppen durch Umsetzen mit Epichlorhydrin zugänglich (US 4 448 948). Die Herstellung von Polyarylenethern mit Aminoendgruppen kann beispielsweise durch Verwendung von p-Aminophenol bei der Polykondensation erfolgen (siehe J.E. McGrath et al, Polymer 30, 1552, 1989).

Als Komponente B enthalten die erfindungsgemäßen Pfropfcopolymerisate 5 bis 85, vorzugsweise 10 bis 80 Gew.-%, besonders bevorzugt 10 bis 75 gew.% thermoplastische Polyamide.

Diese Polyamide sind im Prinzip bekannt und umfassen teilkristalline und amorphe Harze mit einem Molekulargewicht $M_W$ (Gewichtsmittelwert) von wenigstens 5000 g/mol. Sie werden üblicherweise als Nylon bezeichnet. Solche Polyamide sind z.B. in den US-Patentschriften 2071250, 2071251, 2130523, 2130948, 2241322, 2312966, 2512606 und 3393210 beschrieben.

Die Polyamide B können durch Kondensation äquimolarer Mengen einer Dicarbonsäure mit einem Diamin

erhalten werden. Geeignete Dicarbonsäuren sind Alkandicarbonsäuren mit 4 bis 16, insbesondere 6 bis 12 Kohlenstoffatomen und aromatische Dicarbonsäuren, vorzugsweise mit 8 bis 16 Kohlenstoffatomen. Als Beispiele seien Adipinsäure, Azelainsäure, Sebacinsäure, Dodecandisäure, Terephthal- oder Isophthalsäure genannt. Weitere geeeignete Dicarbonsäuren sind 2,6-Pyridindicarbonsäure, 1,4-Naphthalindicarbonsäure, 1,5-Naphthalindicarbonsäure, 2,6-Naphthalindicarbonsäure und 4,4'-Diphenylsulfondicarbonsäure. Als Diamine eignen sich insbesondere Alkandiamine mit 4 bis 16, insbesondere 6 bis 12 Kohlenstoffatomen wie Hexamethylendiamin, dessen Alkylderivate wie z.B. 2-Methylhexamethylendiamin, 3-Methylhexamethylendiamin, 2,2,4-Trimethylhexamethylendiamin, 2,2,5-Trimethylhexamethylendiamin sowie m-Xylylendiamin, Di-(4-aminophenyl)methan, Di-(4-aminocyclohexyl)methan, 2,2-Di-(4-aminophenyl)propan oder 2,2-Di-(4-aminocyclohexyl)propan. In diesem Zusammenhang seien auch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind beispielsweise in den EP-A-38094, EP-A-38582 und EP-A 39524 beschrieben.

Polyamide lassen sich auch durch Kondensation von w-Aminocarbonsäuren bzw. durch Polyaddition von entsprechenden Lactamen herstellen. Beispiele hierfür sind Polyamide, die sich von Lactamen, bzw. ω-Aminocarbonsäuren mit 6 bis 12 (Ring)kohlenstoffatomen ableiten. Sie sind in der Regel teilkristallin.

In einer bevorzugten Ausführungsform werden amorphe Polyamide als wesentliche Bausteine eingesetzt, die

- 40 bis 100 Gew.-%, vorzugsweise 50 bis 99 Gew.-%, Einheiten, die sich von Isophthalsäure und Hexamethylendiamin ableiten und
- 0 bis 60 Gew.-%, vorzugsweise 1 bis 50 Gew.-%, Einheiten, die sich von Terephthalsäure und Hexamethylendiamin ableiten,

enthalten.

Diese amorphen Polyamide weisen üblicherweise eine relative Viskosität $\eta_{rel}$ von 1,4 bis 3,4, vorzugsweise 1,5 bis 2,8, auf, bestimmt anhand einer 1 Gew.-%igen Lösung in 96 Gew.-%iger Schwefelsäure.

Bevorzugte Polyamide sind weiterhin Polyhexamethylenadipinsäureamid (Nylon 66), Polyhexamethylenazelainsäureamid (Nylon 69), Polyhexamethylensebacinsäureamid (Nylon 610), Polyhexamethylendodecansäureamid (Nylon 612) sowie Polyhexamethylenisophthalsäureamid. Weiterhin werden die durch Ringöffnung von Lactamen erhältlichen Polyamide Polycaprolactam (Nylon 6), Polycapryllactam oder Polylaurinsäurelactam bevorzugt. Ferner werden bevorzugt das Polyamid der 11-Aminoundecansäure und ein Polyamid aus Di(4-aminocyclohexyl)methan und Dodecandisäure eingesetzt. Diese Polyamide sind in der Regel teilkristallin.

Weiterhin sind Polyamide geeignet, die durch Copolymerisation zweier oder mehrerer Polyamid-bildender Monomerer erhältlich sind. Derartige teilaromatische Copolyamide sind aufgebaut aus

$b_1$) 20 bis 90 Gew.-% Einheiten, die sich von Terephthalsäure und Hexamethylendiamin ableiten,
$b_2$) 0 bis 50 Gew.-% Einheiten, die sich von E-Caprolactam ableiten,
$b_3$) 0 bis 80 Gew.-% Einheiten, die sich von Adipinsäure und Hexamethylendiamin ableiten und
$b_4$) 0 bis 40 Gew.-% Einheiten, die sich von weiteren Polyamidbildenden Monomeren ableiten,

wobei die Summe der Gewichtsanteile von $b_2$, $b_3$ und $b_4$ wenigstens 10 Gew.-% und höchstens 80 Gew.-% beträgt. Der Anteil an Einheiten, die sich von ε-Caprolactam ableiten, beträgt vorzugsweise 20 bis 50 Gew.-%, insbesondere 25 bis 40 Gew.-%, während der Anteil an Einheiten, die sich von Adipinsäure und Hexamethylendiamin ableiten, vorzugsweise 30 bis 75 Gew.-% und insbesondere 35 bis 60 Gew.-% beträgt. Auch diese Polyamide sind in der Regel teilkristallin.

Die Copolyamide können gleichzeitig Einheiten von ε-Caprolactam $b_2$ als auch Einheiten von Adipinsäure und Hexamethylendiamin $b_3$ enthalten; in diesem Falle ist es von Vorteil, wenn der Anteil an $b_2$ und $b_3$ wenigstens 10 Gew.-%, vorzugsweise wenigstens 20 Gew.-% beträgt. Das Mengenverhältnis der Einheiten $b_1$ und $b_2$ unterliegt dabei keiner besonderen Beschränkung. Als besonders vorteilhaft haben sich Polyamide mit 50 bis 80, insbesondere 60 bis 75 Gew.-% Einheiten $b_1$ und 20 bis 50, insbesondere 25 bis 40 Gew.-% Einheiten $b_2$ erwiesen.

Weiterhin können die teilaromatischen Copolyamide in Mengen bis 40, vorzugsweise 10 bis 30 Gew.-% und insbesondere 20 bis 30 Gew.-% Einheiten $b_4$ enthalten, die sich von anderen Amid-bildenden Monomeren ableiten. Hierzu zählen aromatische Dicarbonsäuren mit 8 bis 16 Kohlenstoffatomen wie beispielsweise Isophthalsäure, substituierte Terephthal- und Isophthalsäure, z.B. 3-t-Butylisophthalsäure, mehrkernige Dicarbonsäuren, z.B. 4,4'- und 3,3'-Diphenyldicarbonsäure, 4,4'- und 3,3'-Diphenylmethandicarbonsäure, 4,4'- und 3,3'-Diphenylsulfondicarbonsäure, 1,4- oder 2,6-Naphthalindicarbonsäure, Phenoxyterephthalsäure, insbesondere jedoch Isophthalsäure. Hierzu zählen weiterhin aliphatische Dicarbonsäuren mit 4 bis 16 Kohlenstoffatomen, aliphatische oder cycloaliphatische Diamine mit 4 bis 16 Kohlenstoffatomen, cyclische Diamine wie Piperazin sowie Aminocarbonsäuren bzw. entsprechende Lactame mit 7 bis 12 Kohlenstoffatomen. Unter cycloaliphatischen Diaminen sind beispielsweise Bis(4-aminocyclohexyl)methan, Bis(4-amino-3-methylcyclohexyl)methan, Bis(4-aminocyclohexyl)-2,2-propan, Bis(4-amino-3-methylcyclohexyl)-2,2-propan, Cyclohexandiamin und Isophorondiamin zu verstehen. Derartige Polyamide werden in der DE-A 4404250 beschrieben.

Enthält die Komponente $b_4$ Einheiten, die sich von symmetrischen Dicarbonsäuren ableiten, bei denen die Carboxylgruppen in paraStellung stehen, so empfiehlt es sich, diese mit $b_1$ und $b_2$ oder $b_1$ und $b_3$ als ternäre Copolyamide aufzubauen, da andernfalls das Copolyamid einen zu hohen Schmelzpunkt aufweist und nur unter Zersetzung schmilzt, was nicht wünschenswert ist.

In einer bevorzugten Ausführungsform ist die Komponente B aufgebaut aus

$b_1$) 65 bis 85 Gew.-% Einheiten, die sich von Terephthalsäure und Hexamethylendiamin ableiten und
$b_4$) 15 bis 35 Gew.-% Einheiten, die sich von Isophthalsäure und Hexamethylendiamin ableiten.

Weiterhin werden Polyamide besonders bevorzugt, die aufgebaut sind aus

$b_1$) 50 bis 70 Gew.-% Einheiten, die sich von Terephthalsäure und Hexamethylendiamin ableiten und
$b_3$) 10 bis 20 Gew.-% Einheiten, die sich von Adipinsäure und Hexamethylendiamin ableiten und
$b_4$) 20 bis 30 Gew.-% Einheiten, die sich von Isophthalsäure und Hexamethylendiamin ableiten.

Weiterhin haben sich solche teilaromatischen Copolyamide als besonders vorteilhaft erwiesen, deren Triamingehalt weniger als 0,5, vorzugsweise weniger als 0,3 Gew.-% beträgt. Ein Triamingehalt von mehr als 0,5 Gew.-% wird häufig bei teilaromatischen Copolyamiden beobachtet, die nach gängigen Verfahren (vgl. US-A 4 603 166) hergestellt werden. Ein hoher Triamingehalt führt zu einer Verschlechterung der Produktqualität und zu Problemen bei der kontinuierlichen Herstellung. Als Triamin, welches diese Probleme verursacht, ist insbesondere das Dihexamethylentriamin zu nennen, welches sich aus dem bei der Herstellung eingesetzten Hexamethylendiamin bildet.

Die Herstellung der bevorzugten teilaromatischen Copolyamide mit niedrigem Triamingehalt kann nach den in den EP-A 129 195 und 129 196 beschriebenen Verfahren erfolgen.

Die erfindungsgemäß verwendeten teilkristallinen Polyamide weisen im allgemeinen eine relative Viskosität $\eta_{rel}$ von 1,7 bis 5,0 auf, bestimmt anhand einer 1 Gew.-%igen Lösung der Polyamide in 96 Gew.-%iger Schwefelsäure bei 25°C. Dies entspricht einem K-Wert (nach Fikentscher) von 50 bis 96 und einem mittleren Molekulargewicht (Zahlenmittel) von etwa 15000 bis 45000. Polyamide mit einer relativen Viskosität von 2,3 bis 4,5, insbesondere von 2,4 bis 4,0, speziell von 2,5 bis 3,4 werden bevorzugt verwendet.

Als Komponente C enthalten die erfindungsgemäßen Pfropfmischpolymerisate 10 bis 90 Gew.-%, vorzugsweise 15 bis 80 Gew.-% eines Copolymeren, enthaltend Einheiten, die sich von

$c_1$) mindestens einer aromatischen Vinylverbindung,
$c_2$) mindestens einem cyclischen, α,β-ungesättigten Dicarbonsäureanhydrid,
$c_3$) mindestens einem cyclischen, α,β-ungesättigten Dicarbonsäureimid,
$c_4$) gegebenenfalls mindestens einem weiteren, mit $c_1$ bis $c_3$ copolymerisierbaren Monomeren ableiten.

Der Anteil der Einheiten $c_1$ beträgt bevorzugt 20 bis 90 Mol-%, insbesondere 40 bis 80 Mol-% und besonders bevorzugt 50 bis 75 Mol-%, bezogen auf die Komponente C. Bei den aromatischen Vinylverbindungen handelt es sich vorzugsweise um Styrol und Styrolderivate. Geeignete Styrolderivate sind beispielsweise α-Methylstyrol oder kernsubstituierte Styrolderivate wie Vinyltoluol, p-tert.-Butylstyrol oder Chlorstyrol. Auch Mischungen unterschiedlicher aromatischer Vinylverbindungen sind brauchbar.

Ganz besonders bevorzugt enthalten die erfindungsgemäßen Copolymerisate C Einheiten, die sich von Styrol ableiten.

Der Anteil der Einheiten $c_2$, die sich von cyclischen α,β-ungesättigten Dicarbonsäureanhydriden ableiten beträgt bevorzugt 1 bis 50 Mol-%. Copolymere C mit wesentlich weniger als 1 Mol-%, beispielsweise solche mit weniger als 0,5 Mol-% Einheiten $c_2$ sind im allgemeinen nicht hinreichend temperaturbeständig. Solche mit mehr als 50 Mol-% $c_2$ lassen sich nicht herstellen. Die erfindungsgemäß verwendeten Copolymere C enthalten besonders bevorzugt 1 bis 35 Mol-%, insbesondere 1 bis 25 Mol-% Einheiten $c_2$. Unter cyclischen α,β-ungesättigten Dicarbonsäureanhydriden sind vorzugsweise solche zu verstehen, die 4 bis 20 Kohlenstoffatome aufweisen. Die Doppelbindung kann sowohl exocyclisch als auch endocyclisch sein. Die Einheiten $c_2$ leiten sich vorzugsweise von Maleinsäureanhydrid, Methylmaleinsäureanhydrid oder Itaconsäureanhydrid ab. Das Copolymerisat C kann auch unterschiedliche Einheiten $c_2$ enthalten.

Darüber hinaus enthalten die Copolymere C vorzugsweise 9 bis 50 Mol-%, insbesondere 15 bis 50 Mol-%, besonders bevorzugt 24 bis 49 Mol-% Einheiten $c_3$, die sich von cyclischen α,β-ungesättigten Dicarbonsäureimiden ableiten. Im allgemeinen entsprechen die cyclischen α,β-ungesättigten Dicarbonsäureimide den oben genannten Di-

carbonsäureanhydriden $c_3$. Die Imideinheiten können am Stickstoff ein Wasserstoffatom tragen, weisen in der Regel jedoch einen $C_1$-$C_{20}$-Alkylrest, $C_4$-$C_{20}$-Cycloalkylrest, $C_1$-$C_{10}$-Alk-$C_6$-$C_{18}$-arylrest oder einen $C_6$-$C_{18}$-Arylrest auf. Die Einheiten $C_3$ leiten sich vorzugsweise von N-Phenylmaleinimid ab.

Die Alkylreste können sowohl linear als auch verzweigt sein und eines oder mehrere Sauerstoffatome in der Kette enthalten, wobei die Sauerstoffatome nicht direkt mit dem Stickstoffatom und nicht direkt mit einem anderen Sauerstoffatom verknüpft sind. Zu den Alkylresten zählen z.B. Methyl, Ethyl, n-Propyl, i-Propyl, n-Butyl, i-Butyl, t-Butyl, n-Hexyl, n-Decyl und n-Dodecyl. Die Cycloalkylreste können sowohl unsubstituiert als auch substituiert sein. Geeignete Substituenten sind z.B. Alkylgruppen wie Methyl oder Ethyl. Beispiele für Cycloalkylreste sind Cyclobutyl, Cyclopentyl, Cyclohexyl und 4-Methylcyclohexyl. Der Alkylenteil der Alkarylreste kann sowohl linear als auch verzweigt sein und Substituenten tragen. Beispiele für derartige Substituenten sind Halogenatome wie Chlor oder Brom. Zu den Beispielen für Alkarylreste zählen Benzyl, Ethylphenyl oder p-Chlorbenzyl. Auch die Arylreste können 1, 2 oder 3 Substituenten, beispielsweise Methyl oder Ethyl oder Halogenatome wie Chlor oder Brom, tragen. Als Arylrest bzw. Arylteil bevorzugt sind Phenyl und Naphthyl. Besonders bevorzugte Reste sind Cyclohexyl und Phenyl.

Bevorzugt sind Pfropfcopolymerisate, in denen das Copolymer C aufgebaut ist aus Einheiten, die sich von

$c_1$) Styrol
$c_2$) Maleinsäureanhydrid und
$c_3$) N-Phenylmaleinimid ableiten.

Darüber hinaus kann das Copolymer C noch Einheiten $c_4$ enthalten, die sich von anderen radikalisch polymerisierbaren Verbindungen ableiten. Wenn vorhanden, sind die Einheiten $c_4$ vorzugsweise in einer Menge von bis zu 30 Mol-%, insbesondere 5 bis 25 Mol-% enthalten. Beispiele für solche Verbindungen sind Acrylsäure und Methacrylsäure und Derivate davon wie Acrylnitril, Methacrylnitril, (Meth)acrylsäurealkylester wie Acrylsäureethylester oder Methacrylsäuremethylester.

Die Verteilung der Struktureinheiten $c_1$, $c_2$, $c_3$ und $c_4$ im Copolymeren C ist statistisch. In der Regel weisen die Copolymere C Molekulargewichte $M_W$ (Gewichtsmittelwert) von 30 000 bis 500 000, bevorzugt 50 000 bis 250 000, insbesondere 70 000 bis 200 000 g/ mol auf.

Die Herstellung der Copolymere C kann durch radikalische Copolymerisation der entsprechenden Monomere erfolgen. Die Umsetzung kann sowohl in Suspension, Emulsion, Lösung oder Substanz durchgeführt werden, wobei letztere Vorgehensweise bevorzugt wird. Die Initiierung der radikalischen Reaktion kann nach den üblichen Methoden wie Licht oder bevorzugt mit Radikalstartern wie Peroxiden beispielsweise Benzoylperoxid erfolgen.

Die Copolymere C können gemäß US 4 404 322 dadurch hergestellt werden, daß zunächst die den Struktureinheiten $c_1$, $c_2$ und gegebenenfalls $c_4$ entsprechenden Monomere radikalisch copolymerisiert werden und anschließend ein Teil der im Reaktionsprodukt enthaltenen Anhydridgruppen im Sinne einer polymeranalogen Reaktion mit den entsprechenden primären Aminen oder Ammoniak in die Imidgruppen überführt werden. Diese Reaktion wird in der Regel in Gegenwart eines tertiären Amins, beispielsweise eines Trialkylamins oder Dialkylarylamins, z.B. Triethylamin oder N,N-Diethylanilin als Katalysator bei Temperaturen im Bereich von 80 bis 350°C ausgeführt.

Bei dieser Herstellungsvariante werden vorzugsweise 50 bis 75 Mol-% aromatische Vinylverbindungen mit 25 bis 50 Mol-% cyclischen $\alpha,\beta$-ungesättigten Dicarbonsäureanhydriden umgesetzt und anschließend mit Ammoniak oder primären Aminen ($c_5$) behandelt, wobei das molare Verhältnis von Amin zu Anhydridgruppe im Bereich von 0,9 bis 1,1 liegt.

Die Herstellung der erfindungsgemäßen Pfropfmischpolymerisate kann beispielsweise durch Umsetzung der Komponenten A, B und C in der Schmelze erfolgen. Hierzu werden die Ausgangskomponenten in üblichen Mischvorrichtungen wie Schneckenextrudern, vorzugsweise Zweischneckenextrudern, Brabender-Mühlen oder Banburry-Mühlen sowie Knetern gemischt und anschließend extrudiert. Nach der Extrusion wird das Extrudat abgekühlt und zerkleinert.

Um eine möglichst homogene Masse zu erhalten, ist eine intensive Durchmischung vorteilhaft. Dazu sind im allgemeinen mittlere Mischzeiten von 0,2 bis 30 Minuten bei Temperaturen im Bereich von 250 bis 380°C, vorzugsweise 280 bis 350°C, erforderlich.

Die Reihenfolge der Mischung der Komponenten kann variiert werden. So können zwei der drei Komponenten vorgemischt werden, es können aber auch alle drei Komponenten gemeinsam gemischt werden.

In einem anderen Verfahren werden die Komponenten A bzw. B mit C in Lösung oder in der Schmelze umgesetzt. Das erhaltene Copolymer wird anschließend in Lösung oder bevorzugt in der Schmelze mit der noch fehlenden Komponente B bzw. A zur Reaktion gebracht. Als Lösungsmittel kommen dipolar-aprotische Flüssigkeiten wie Dimethylformamid, Dimethylacetamid oder N-Methylpyrrolidon oder Mischungen dipolar-aprotischer Flüssigkeiten mit anderen organischen Lösungsmitteln wie beispielsweise Chlorbenzol, o-Dichlorbenzol, Tetrahydrofuran, Dichlormethan, Trichlormethan in Frage. Die Umsetzung der Komponenten erfolgt in Abhängigkeit von der Endgruppe an Polymer A bei Temperaturen im Bereich von 20 bis 200°C. Die Reaktionsdauer liegt in der Regel zwischen 30 Minuten und 24

Stunden. Üblicherweise liegen die Polymere A bzw. B und C in Konzentrationen von jeweils 1 bis 30 Gew.-%, insbesondere 10 bis 25 Gew.-% vor. Das Reaktionsprodukt kann durch Ausfällen aus der Lösung mit einem Fällungsmittel wie Wasser oder Ethanol isoliert werden. Anschließend wird das Reaktionsprodukt mit der noch fehlenden Komponente B bzw. A in der oben beschriebenen Weise umgesetzt.

Die erfindungsgemäßen Pfropfcopolymerisate zeichnen sich dadurch aus, daß sie mehrphasig sind, was sich beispielsweise anhand mehrerer auftretender Glasübergangstemperaturen nachweisen läßt.

In einer erfindungsgemäßen Ausführungsform dienen die Pfropfcopolymere als Grundlage für Formmassen. Diese enthalten als übliche Zusätze bis zu 60 Gew.-% faser- oder teilchenförmige Füllstoffe, bis zu 45 Gew.-% schlagzähmodifizierende Kautschuke und bis zu 40 Gew.-% Zusatzstoffe wie Flammschutzmittel, Pigmente, Stabilisatoren, Antistatika und/oder Verarbeitungshilfsmittel, wobei die Gewichtsteile dieser Komponenten auf das Gesamtgewicht der Formmasse bezogen sind.

Eine thermoplastische Formmasse umfaßt vorzugsweise;

(I) 1 bis 30 Gew.-% mindestens eines Pfropfcopolymerisats nach einem der Ansprüche 1 bis 9,
(II) 0 bis 60 Gew.-% faser- oder teilchenförmige Füllstoffe,
(III) 0 bis 45 Gew.-% schlagzähmodifizierende Kautschuke und
(IV) 0 bis 40 Gew.-% Zusatzstoffe wie Flammschutzmittel, Pigmente, Stabilisatoren, Antistatika, Verarbeitungshilfsmittel,
(V) 1 bis 98 Gew.-% mindestens eines Polyarylenethers ohne reaktive Endgruppen,
(VI) 1 bis 98 Gew.-% mindestens eines thermoplastischen Polyamids,

wobei die Gewichtsanteile der Komponenten (I) bis (VI) auf das Gesamtgewicht der Formmasse bezogen sind.

Die Füllstoffe, die vorzugsweise bis zu 55 Gew.-% der Formmasse ausmachen, können z.B. Kohlenstoff, Glas, Quarz, Aramid, Alkali- und Erdalkalicarbonate, Alkali- und Erdalkalisilikate sein.

Bevorzugte faserförmige Füll- oder Verstärkungsstoffe sind Kohlenstoffasern, Kaliumtitanatwhisker, Aramidfasern und besonders bevorzugt Glasfasern. Bei der Verwendung von Glasfasern können diese mit einer Schlichte und einem Haftvermittler ausgerüstet sein. Im allgemeinen haben die verwendeten Kohlenstoff- und Glasfasern einen Durchmesser im Bereich von 6 bis 20 µm.

Die Einarbeitung der Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Als teilchenförmige Füllstoffe eignen sich amorphe Kieselsäure, Magnesiumcarbonat (Kreide), gepulverter Quarz, Glaskugeln und insbesondere Calciumsilikate wie Wollastonit und Kaolin (insbesondere kalzinierter Kaolin).

Bevorzugte Kombinationen von Füllstoffen sind z.B. 20 Gew.-% Glasfasern mit 15 Gew.-% Wollastonit oder 15 Gew.-% Glasfasern mit 15 Gew.-% Wollastonit. Eine weitere bevorzugte Kombination enthält z.B. 20 Gew.-% Kohlefasern und 20 Gew.-% Wollastonit.

Weiterhin enthalten die erfindungsgemäßen Formmassen vorzugsweise 0 bis 30 Gew.-% schlagzähmodifizierende Kautschuke. Hierzu eignen sich insbesondere solche, die Polyarylenether, Polyamide und/oder die Copolymere C schlagzähmodifizieren können. Diese Eigenschaften erfüllen beispielsweise EP- bzw. EPDM-Kautschuke, die mit geeigneten funktionellen Gruppen gepfropft werden. Hierzu eignen sich beispielsweise Maleinsäureanhydrid, Itaconsäure, Acrylsäure, Glycidylacrylat und Glycidylmethacrylat.

Diese Monomeren können in der Schmelze oder in Lösung, gegebenenfalls in Gegenwart eines Radikalstarters wie Cumolhydroperoxid auf das Polymere aufgepfropft werden.

Weitere geeignete schlagzähmodifizierende Kautschuke sind Copolymere von α-Olefinen. Bei den α-Olefinen handelt es sich üblicherweise um Monomere mit 2 bis 8 C-Atomen, vorzugsweise Ethylen und Propylen. Als Comonomere haben sich Alkylacrylate oder Alkylmethacrylate, die sich von Alkoholen mit 1 bis 8 C-Atomen, vorzugsweise von Ethanol, Butanol oder Ethylhexanol, ableiten sowie reaktive Comonomere wie Acrylsäure, Methacrylsäure, Maleinsäure, Maleinsäureanhydrid oder Glycidyl(meth)acrylat und weiterhin Vinylester, insbesondere Vinylacetat als geeignet erwiesen. Mischungen verschiedener Comonomere können ebenfalls eingesetzt werden. Als besonders geeignet haben sich Copolymere des Ethylens mit Ethyl- oder Butylacrylat und Acrylsäure und/oder Maleinsäureanhydrid erwiesen.

Die Copolymere können in einem Hochdruckprozeß bei einem Druck von 400 bis 4500 bar oder durch Pfropfen der Comonomeren auf das Poly-α-Olefin hergestellt werden. Der Anteil des α-Olefins an dem Copolymeren liegt i.a. im Bereich von 99,95 bis 55 Gew.-%.

Als weitere Gruppe von geeigneten Schlagzähmodifizierern sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glastemperatur von mindestens 25°C, unter einem weichen Bestandteil ein Polymerisat mit einer Glastemperatur von

höchstens 0°C. Diese Produkte weisen eine Struktur aus einem Kern und mindestens einer Schale auf, wobei sich die Struktur durch die Reihenfolge der Monomerzugabe ergibt. Die weichen Bestandteile leiten sich im allgemeinen von Butadien, Isopren, Alkylacrylaten, Alkylmethacrylaten oder Siloxanen und gegebenenfalls weiteren Comonomeren ab. Geeignete Siloxanpolymere können beispielsweise ausgehend von cyclischem Octamethyltetrasiloxan oder Tetravinyltetramethyltetrasiloxan hergestellt werden. Die Herstellung dieser Polymere kann beispielsweise unter Verwendung von γ-Mercaptopropylmethyldimethoxysilan durch ringöffnende kationischen Polymerisation, vorzugsweise in Gegenwart von Sulfonsäuren erfolgen. Die Siloxane können auch vernetzt werden, indem z.B. die Polymerisationsreaktion in Gegenwart von Silanen mit hydrolysierbaren Gruppen wie Halogen oder Alkoxygruppen, wie Tetraethoxysilan, Methyltrimethoxysilan oder Phenyltrimethoxysilan, durchgeführt wird. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich im allgemeinen von Styrol, α-Methylstyrol und deren Copolymerisaten ab, wobei als Comonomere vorzugsweise Acrylnitril, Methacrylnitril und Methylmethacrylat verwendet werden.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carboxyl-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeigneter funktionalisierter Monomere bei der Polymerisation der letzten Schale. Geeignete funktionalisierte Monomere sind beispielsweise Maleinsäure, Maleinsäureanhydrid, Mono- oder Diester der Maleinsäure, tert.-Eutyl(meth)acrylat, Acrylsäure, Glycidyl(meth)acrylat und Vinyloxazolin. Der Anteil an Monomeren mit funktionellen Gruppen beträgt im allgemeinen 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt im allgemeinen 1:9 bis 9:1, bevorzugt 3:7 bis 8:2.

Derartige Kautschuke sind an sich bekannt und beispielsweise in der EP-A 208 187 beschrieben.

Eine weitere Gruppe von geeigneten Schlagzähmodifiern sind thermoplastische Polyester-Elastomere. Unter Polyesterelastomeren werden dabei segmentierte Copolyetherester verstanden, die langkettige Segmente, die sich in der Regel von Poly(alkylen)etherglycolen und kurzkettige Segmente, die sich von niedermolekularen Diolen und Dicarbonsäuren ableiten, enthalten. Derartige Produkte sind an sich bekannt und in der Literatur, z.B. in der US-A 3 651 014, beschrieben. Auch im Handel sind entsprechende Produkte unter den Bezeichnungen Hytrel® (Du Pont), Arnitel® (Akzo) und Pelprene® (Toyobo Co. Ltd.) erhältlich.

Selbstverständlich können auch Mischungen verschiedener Kautschuke eingesetzt werden.

Die erfindungsgemäßen Formmassen können darüber hinaus Zusatzstoffe enthalten, die für Polyarylenether, Polyamide und Styrol/ Maleinsäureanhydrid-Copolymerisate typisch und gebräuchlich sind. Als solche Zusatzstoffe seien beispielsweise genannt: Farbstoffe, Pigmente, Antistatika, Antioxidantien und Verarbeitungshilfsmittel, insbesondere Schmiermittel, die für die Weiterverarbeitung der Formmasse, z.B. bei der Herstellung von Formkörpern bzw. Formteilen erforderlich sind. Die Herstellung der erfindungsgemäßen Formmassen erfolgt nach an sich bekannten Verfahren durch Mischen der Komponenten A, B, C und gegebenenfalls der Füllstoffe, Schlagzähmodifizierer und Zusatzstoffe. Es kann vorteilhaft sein, einzelne Komponenten vorzumischen. Das Mischen geschieht vorzugsweise bei den Temperaturen, die für die Herstellung der Pfropfcopolymerisate angegeben wurden, durch gemeinsames Extrudieren, Kneten oder Verwalzen bis zur makroskopischen Homogenität der Formmasse.

Auch ist es möglich, die fertigen Pfropfcopolymerisate mit den Füllstoffen, Schlagzähmodifizierern und Zusatzstoffen, vorzugsweise in der Schmelze zu mischen und anschließend zu extrudieren.

Die erfindungsgemäßen thermoplastischen Formmassen können nach dem bekannten Verfahren der Thermoplastverarbeitung, also z.B. durch Extrudieren, Spritzgießen, Kalandrieren, Hohlkörperblasen, Pressen oder Sintern, bearbeitet werden.

In einer anderen Ausführungsform der Erfindung werden die Pfropfcopolymerisate als Verträglichkeitsvermittler für Polymermischungen auf der Basis von Polyarylenethern ohne reaktiven Endgruppen und thermoplastischen Polyamiden (Komponente B) verwendet. Als inerte Endgruppen weisen die Polyarylenether die oben genannten Gruppen auf.

Diese Formmassen enthalten üblicherweise 1 bis 98 Gew.-%, vorzugsweise 5 bis 93 Gew.-%, insbesondere 17 bis 80 Gew.-% Polyarylenether mit inerten Endgruppen, 1 bis 98 Gew.-%, vorzugsweise 5 bis 93 Gew.-%, insbesondere 17 bis 80 Gew.-% Polyamide (Komponente B) sowie 1 bis 30 Gew.-%, vorzugsweise 2 bis 20 Gew.-% insbesondere 3 bis 15 Gew.-% des Pfropfcopolymerisats als Verträglichkeitsvermittler. Darüber hinaus können diese Formmassen als weitere Bestandteile die bereits erwähnten Füllstoffe, Schlagzähmodifizierer und Zusatzstoffe in den vorstehend genannten Mengen enthalten. Die Herstellung dieser Formmassen erfolgt in der für die Herstellung der Formmassen auf Pfropfcopolymerisat-Basis beschriebenen Weise.

Die erfindungsgemäßen Formmassen weisen gute mechanische Eigenschaften wie Schlagzähigkeit sowie eine hohe Dauergebrauchsbeständigkeit und eine hohe Wärmeformbeständigkeit auf. Sie eignen sich somit für zahlreiche Anwendungen, wie beispielsweise hoch beanspruchte Teile im Fahrzeugbau, Gehäuseteile für medizinische Geräte, Elektrogeräte etc.

Die folgenden Beispiele sollen die vorliegende Erfindung erläutern, ohne sie jedoch einzuschränken.

Beispiele

Anwendungstechnische Prüfungen

Wärmeformbeständigkeit: Bestimmung der Vicat-Erweichungstemperatur an Normkleinstäben nach DIN 53460 mit einer Kraft von 49,05 N und einem Temperaturanstieg von 50°C/h.
Fließfähigkeit: Nach DIN 53735 bei einer Temperatur von 320°C und einer Belastung von 21,6 kg.
Zugfestigkeit: Zugversuch nach DIN 53455, wobei der Probenkörper vor und nach thermischer Belastung (160°C, 21 Tage) geprüft wurde. Reißdehnung $\varepsilon_R$: Zugversuch nach DIN 53455, wobei der Probenkörper nach thermischer Belastung (160°C; 6 Tage) geprüft wurde.
Viskositätszahl (VZ): Bestimmung der Viskosität einer 1%igen Lösung des Polymers in N-Methylpyrrolidon bei 25°C. Die Viskositätszahl der Polyamide wurde anhand der Viskosität einer 1%igen Lösung in konzentrierter Schwefelsäure bei 25°C bestimmt.
Erweichungs- und Schmelzpunkte: DSC 2000 der Fa. Du Pont. Umsatz: Extrahierter Anteil der Komponente A bzw. B bei einer selektiven Extraktion mit Dimethylformamid bzw. Ameisensäure. Hydroxyl-Endgruppenkonzentration: Potentiometrische Titration der Hydroxylgruppen mit methanolischer KOH-Lösung in Dimethylformamid.
Amino-Endgruppenkonzentration: Potentiometrische Titration der Aminogruppen mit Trifluormethansulfonsäure in o-Dichlorbenzol. Chlor-Endgruppenkonzentration: Bestimmung des organisch gebundenen Chlorgehalts des Polymers.

Komponenten

$A_I$: Polyarylether aus 4,4'-Di-(4-hydroxyphenyl)sulfon und 4,4'-Dichlordiphenylsulfon (VZ=46,2 ml/g, 97% Cl-Endgruppen, 3% OH-Endgruppen, $T_g$=217°C).

$A_{II}$: Polyarylether aus 4,4'-Di-(4-hydroxyphenyl)sulfon und 4,4'-Dichlordiphenylsulfon (VZ=31,5 ml/g, 43% NH2-Endgruppen, 7% OH-Endgruppen, 50% Cl-Endgruppen, $T_g$=214°C).

$A_{III}$: Polyarylether aus 4,4'-Di-(4-hydroxyphenyl)sulfon und 4,4'-Dichlordiphenylsulfon (VZ=18,9 ml/g, 73% $NH_2$-Endgruppen, 25% OH-Endgruppen, 2% Cl-Endgruppen, $T_g$=210°C).

$B_I$: Polyamid aus Hexamethylendiamin und Isophthalsäure: VZ = 62 ml/g (1%-ige Lösung in konzentrierter Schwefelsäure), 0,15 Gew.-% $NH_2$-Endgruppen, $T_g$=126°C.

$B_{II}$: Teilaromatisches Copolyamid bestehend aus 55 Tl. Terephthalsäure, 35 Tl. Caprolactam und 38,5 Tl. Hexamethylendiamin: relative Viskosität $\eta_{rel}$ = 2,4 (1%-ige Lösung in konzentrierter Schwefelsäure), 0,18 Gew.-% $NH_2$-Endgruppen, $T_g$ = 100°C, $T_m$ = 290°C.

$C_I$: Terpolymer, bestehend aus 58 Mol-% Styrol, 3 Mol-% Maleinsäureanhydrid und 39 Mol-% N-Phenylmaleinimid ($T_g$=206°C).

$C_{II}$: Terpolymer, bestehend aus 58 Mol-% Styrol, 8 Mol-% Maleinsäureanhydrid und 34 Mol-% N-Phenylmaleinimid ($T_g$=204°C).

V: Polyarylenether aus 4,4'-Dihydroxydiphenylsulfon und 4,4'-Dichlordiphenylsulfon (VZ = 54 ml/g, Tg = 225°C, 60% Cl-Endgruppen, 40% $OCH_3$-Endgruppen, Handelsprodukt Ultrason® E 2010, BASF).

Weiterhin wurde zu Vergleichszwecken als Verträglichkeitsvermittler ein Kondensationsprodukt aus Bisphenol A und Epichlorhydrin verwendet: relative Viskosiät $\eta_{rel}$ = 1,13 (0,5%ige Lösung in Dichlormethan, 25°C) Phenoxy® der UCC.

Herstellung der erfindungsgemäßen Pfropcopolymerisate

Beispiel 1

Zu einer Lösung von 100 g Komponente $C_{II}$ in 750 ml N-Methylpyrrolidon werden unter Inertgasatmosphäre bei 0°C und intensivem Rühren 50 g der Komponente $A_{II}$ gegeben. Das Reaktionsgemisch wird dann noch 30 Minuten bei 0°C gerührt und anschließend 8 Stunden auf 190°C erhitzt. Nach Erkalten der Lösung wird das Produkt ($Z_1$) durch Fällung in Wasser isoliert und anschließend 8 Stunden bei 120°C im Vakuum getrocknet.

Im Haake-Kneter werden durch Umsetzung von jeweils 35 g $Z_I$ mit 15 g $B_I$ bzw. $B_{II}$ bei 320°C (Reaktionsdauer 5 Minuten) die Pfropfcopolymere $P_I$ und $P_{II}$ erhalten. Die Ergebnisse der Charakterisierung dieser Produkte sind in Tabelle 1 aufgeführt.

Beispiel 2

In einem Haake-Kneter wird eine Mischung aus 20 g Komponente $A_{III}$, 15 g Komponente $B_I$ (bzw. $B_{II}$) und 15 g Komponente $C_I$ bei 320°C 5 Minuten intensiv gemischt, die erhaltene Formmasse wird ausgetragen und zerkleinert. Man erhält die Pfropfcopolymerisate $P_{III}$ und $P_{IV}$. Die Ergebnisse der Charakterisierung von $P_{III}$ bzw. $P_{IV}$ sind in Tabelle 1 aufgeführt.

Vergleichsbeispiel 1

In einem Haake-Kneter wird eine Mischung aus 20 g Komponente $A_I$, 15 g Komponente $B_I$ und 15 g Komponente $C_{II}$ bei 320°C 5 Minuten intensiv gemischt, die erhaltene Formmasse wird ausgetragen und zerkleinert. Die Ergebnisse der Charakterisierung dieses Produkts $V_1$ sind in Tabelle 1 aufgeführt.

Beispiel 3

Eine Mischung aus 3 kg Komponente $A_{II}$, 2 kg Komponente $C_{II}$ und 2 kg Komponente $B_{II}$ wird in einem Zweiwellenextruder (ZSK 30, Werner & Pfleiderer) bei 340°C gemischt. Der Strang wird in einem Wasserbad abgekühlt und granuliert. Die Ergebnisse der Charakterisierung des erhaltenen Produktes $P_V$ sind in Tabelle 1 aufgeführt.

Tabelle 1

| Beispiel-Nr. | 1 | | 2 | | 3 | V1 |
|---|---|---|---|---|---|---|
| Produkt | $P_I$ | $P_{II}$ | $P_{III}$ | $P_{IV}$ | $P_V$ | $V_I$ |
| $T_g$ [°C] | 126 | 100 | 126 | 100 | 100 | 126 |
| | 204 | 204 | 206 | 206 | 204 | 204 |
| | 213 | 214 | 210 | 210 | 214 | 217 |
| $T_m$ [°C] | - | 290 | - | 290 | 290 | - |
| extrahierbarer Anteil A/C [%] | 3,2 | 3 | 6 | 6,4 | 5,1 | 98 |
| extrahierbarer Anteil B [%] | 1,7 | 0,9 | 1,2 | 1,6 | 1,9 | 1,0 |
| Vicat B [°C] | 200 | 202 | 199 | 201 | 203 | 203 |

Aus Tabelle 1 läßt sich entnehmen, daß zwischen Polyarylenethern mit einer ausreichenden Zahl an reaktiven Endgruppen, Polyamiden und Copolymeren C eine Umsetzung zu Pfropfcopolymeren erfolgt und daß in allen Fällen mehrphasige Produkte erhalten wurden. Bei Einsatz eines Polyarylenethers mit lediglich 3% reaktiven Endgruppen erfolgt eine nur geringfügige Umsetzung.

Verwendung der Pfropfcopolymerisate als Verträglichkeitsvermittler

(Beispiele 4 und 5 sowie Vergleichsbeispiele V2 - V4)

Um die Wirksamkeit als Verträglichkeitsvermittler für Polyarylether/Polyamid-Blends nachzuweisen, wurden die in Tabelle 2 aufgeführten Formmassen hergestellt und charakterisiert:

Die Formmassen $V_2$-$V_4$, 4 und 5 wurden durch Extrusion auf einem Zweiwellenextruder ZSK30 der Firma

Werner & Pfleiderer bei einer Gehäusetemperatur von 340°C und einem Durchsatz von 10 kg/h hergestellt.

Die Verarbeitung der Granulate zu Formkörpern erfolgte bei einer Massetemperatur von 340°C und einer Werkzeugtemperatur von 100°C.

Tabelle 2

| Beispiel | V2 | V3 | V4 | 4 | 5 |
|---|---|---|---|---|---|
| V [Gew.-%] | 100 | 70 | 63 | 66,5 | 63 |
| B [Gew.-%] | - | 30 | 27 | 28,5 | 27 |
| $P_V$ [Gew.-%] | - | - | - | 5 | 10 |
| Phenoxy® [Gew.-%] | - | - | 10 | - | - |
| Vicat B [°C] | 218 | 207 | 198 | 206 | 206 |
| MVI [ml/10'] | 64 | 201 | 219 | 204 | 205 |
| Zugfestigkeit | | | | | |
| 0 d, 160°C [N/mm$^2$] | 88 | 91 | 90 | 92 | 93 |
| 21 d, 160°C [N/mm$^2$] | 82 | 79 | 54 | 80 | 81 |
| Reißfestigkeit $\varepsilon_R$ | | | | | |
| 6 d, 160°C [%] | 40 | 1,7 | 17 | 26 | 32 |

Wie aus Tabelle 2 ersichtlich, weisen die erfindungsgemäßen Formmassen gegenüber der Formmasse mit Phenoxy® als Verträglichkeitsvermittler eine höhere Wärmeformbeständigkeit und Temperaturstabilität auf. Gegenüber dem Verträglichkeitsvermittler-freien Blend ist eine bessere Fließfähigkeit und bessere Temperaturstabilität zu verzeichnen. Des weiteren wird die Reißdehnung wesentlich erhöht.

**Patentansprüche**

**1.** Pfropfcopolymerisate, erhältlich durch Umsetzung von

A) 5 bis 85 Gew.-% wenigstens eines Polyarylenethers mit mindestens 30% reaktiven Endgruppen, die in der Lage sind, mit den funktionellen Gruppen der Komponente C zu reagieren,
B) 5 bis 85 Gew.-% wenigstens eines thermoplastischen Polyamids,
C) 10 bis 90 Gew.-% wenigstens eines Copolymers, das aufgebaut ist aus

$c_1$) mindestens einer aromatischen Vinylverbindung,
$c_2$) mindestens einem cyclischen, $\alpha,\beta$-ungesättigten Dicarbonsäureanhydrid,
$c_3$) mindestens einem cyclischen, $\alpha,\beta$-ungesättigten Dicarbonsäureimid,
$c_4$) gegebenenfalls mindestens einem weiteren, mit $c_1$ bis $c_3$ copolymerisierbaren Monomeren,

mit der Maßgabe, daß sich die Gewichtsanteile von A, B und C auf 100 Gew.-% addieren.

**2.** Pfropfcopolymerisate nach Anspruch 1, erhältlich durch Umsetzung der Komponente A in einer Menge von 10 bis 75 Gew.-%, der Komponente B in einer Menge von 10 bis 75 Gew.-% und der Komponente C in einer Menge von 15 bis 80 Gew.-%.

**3.** Pfropfcopolymerisate nach Anspruch 1 oder 2, ausgehend von Polyarylenethern A), die als reaktive Endgruppen Hydroxy-, Amino- oder Epoxygruppen aufweisen.

**4.** Pfropfcopolymerisate nach einem der vorhergehenden Ansprüche, in denen die Polyarylenether wiederkehrende Einheiten der allgemeinen Formel I,

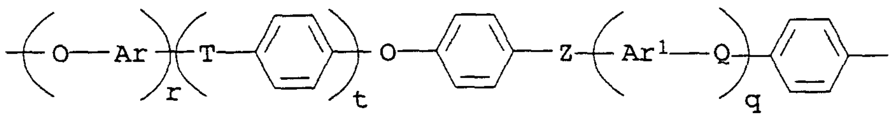 (I),

enthalten, in der r, t und q unabhängig voneinander jeweils für 0, 1, 2 oder 3 stehen,

T, Q und Z gleich oder verschieden sind und unabhängig voneinander jeweils eine chemische Bindung oder eine Gruppe ausgewählt aus -O-, -S-, $-SO_2-$,

S=O, C=O,

-N=N-, $-R^aC=CR^b-$ und $-CR^cR^d-$ sein können, mit der Maßgabe, daß mindestens eine der Gruppen T, Q oder Z für $-SO_2-$ oder C=O steht,

$R^a$ und $R^b$ jeweils ein Wasserstoffatom oder eine $C_1$-$C_{10}$-Alkylgruppe bedeuten, $R^c$ und $R^d$ jeweils ein Wasserstoffatom, eine $C_1$-$C_{10}$-Alkyl-, $C_1$-$C_{10}$-Alkoxy- oder $C_6$-$C_{18}$-Arylgruppe bedeuten, wobei die vorgenannten Gruppen jeweils mit Fluor- und/oder Chloratomen substituiert sein können,

Ar und $Ar^1$ für $C_6$-$C_{18}$-Arylgruppen stehen, wobei diese Gruppen weiterhin Substituenten haben können, ausgewählt aus $C_1$-$C_{10}$-Alkyl, $C_6$-$C_{18}$-Aryl, $C_1$-$C_{10}$-Alkoxy und Halogen.

**5.** Pfropfcopolymerisate nach Anspruch 4, in denen die Polyarylenether A)

$a_1$) 3 bis 97 Mol-% wiederkehrende Einheiten $I_1$

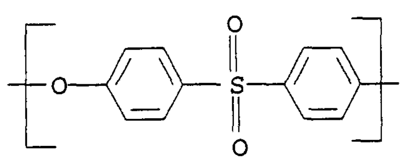 $I_1$

$a_2$) 3 bis 97 Mol-% wiederkehrende Einheiten $I_2$

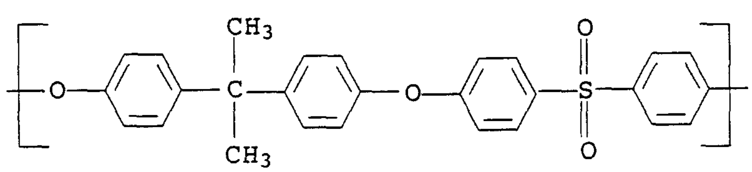 $I_2$

enthalten.

**6.** Pfropfcopolymerisate nach einem der vorhergehenden Ansprüche, die als Komponente B ein Polyamid enthalten, das aus

$b_1$) 20 bis 90 Gew.-% Einheiten, die sich von Terephthalsäure und Hexamethylendiamin ableiten,
$b_2$) 0 bis 50 Gew.-% Einheiten, die sich von ε-Caprolactam ableiten,
$b_3$) 0 bis 80 Gew.-% Einheiten, die sich von Adipinsäure und Hexamethylendiamin ableiten und
$b_4$) 0 bis 40 Gew.-% Einheiten, die sich von weiteren Polyamid-bildenden Monomeren ableiten,

aufgebaut ist, wobei die Summe der Gewichtsanteile von $b_2$, $b_3$ und $b_4$ wenigstens 10 Gew.-% und höchstens 80 Gew.-% beträgt.

**7.** Pfropfcopolymerisate nach einem der Ansprüche 1 bis 5, die als Komponente B ein amorphes Polyamid enthalten, das aus

40 bis 100 Gew.-% Einheiten, die sich von Isophthalsäure und Hexamethylendiamin ableiten, und
0 bis 60 Gew.-% Einheiten, die sich von Terephthalsäure und Hexamethylendiamin ableiten,

aufgebaut ist.

**8.** Pfropfcopolymerisate nach einem der vorhergehenden Ansprüche, in denen die Copolymere C aufgebaut sind aus

$c_1$) 20 bis 90 Mol-%, vorzugsweise 40 bis 80 Mol-%, aromatischen Vinylverbindungen,
$c_2$) 1 bis 50 Mol-%, vorzugsweise 1 bis 35 Mol-%, cyclischen, α-β-ungesättigten Dicarbonsäureanhydriden,
$c_3$) 9 bis 50 Mol-%, vorzugsweise 15 bis 50 Mol-%, cyclischen, α-β-ungesättigten Dicarbonsäureimiden und
$c_4$) 0 bis 30 Mol-%, vorzugsweise 5 bis 35 Mol-%, weiteren von radikalisch polymerisierbaren Monomeren abgeleiteten Einheiten.

**9.** Pfropfcopolymerisate nach einem der vorhergehenden Ansprüche, in denen das Copolymer C aufgebaut ist aus Einheiten, die sich von

$c_1$) Styrol
$c_2$) Maleinsäureanhydrid und
$c_3$) N-Phenylmaleinimid ableiten.

**10.** Verwendung der Pfropfcopolymerisate gemäß einem der Ansprüche 1 bis 9 zur Herstellung von thermoplastischen Formmassen oder als Verträglichkeitsvermittler für Polymerblends auf der Basis von Polyarylenethern und Polyamiden.

**11.** Thermoplastische Formmasse, umfassend

(I) mindestens ein Pfropfcopolymerisat nach einem der Ansprüche 1 bis 9,
(II) 0 bis 60 Gew.-% faser- oder teilchenförmige Füllstoffe,
(III) 0 bis 45 Gew.-% schlagzähmodifizierende Kautschuke und
(IV) 0 bis 40 Gew.-% Zusatzstoffe wie Flammschutzmittel, Pigmente, Stabilisatoren, Antistatika, Verarbeitungshilfsmittel,

wobei die Gewichtsanteile der Komponenten (II) bis (IV) auf das Gesamtgewicht der Formmasse bezogen sind.

**12.** Thermoplastische Formmasse nach Anspruch 11, die umfaßt:

(I) 1 bis 30 Gew.-% mindestens eines Pfropfcopolymerisats nach einem der Ansprüche 1 bis 9,
(II) 0 bis 60 Gew.-% faser- oder teilchenförmige Füllstoffe,
(III) 0 bis 45 Gew.-% schlagzähmodifizierende Kautschuke und
(IV) 0 bis 40 Gew.-% Zusatzstoffe wie Flammschutzmittel, Pigmente, Stabilisatoren, Antistatika, Verarbeitungshilfsmittel,
(V) 1 bis 98 Gew.-% mindestens eines Polyarylenethers ohne reaktive Endgruppen,
(VI) 1 bis 98 Gew.-% mindestens eines thermoplastischen Polyamids,

wobei die Gewichtsanteile der Komponenten (I) bis (VI) auf das Gesamtgewicht der Formmasse bezogen sind.

## Claims

**1.** A graft copolymer obtainable by reacting

A) from 5 to 85% by weight of at least one polyarylene ether having at least 30% of reactive terminal groups which are capable of reacting with the functional groups of component C,

B) from 5 to 85% by weight of at least one thermoplastic polyamide and
C) from 10 to 90% by weight of at least one copolymer which is composed of

$c_1$) at least one aromatic vinyl compound,
$c_2$) at least one cyclic, $\alpha,\beta$-unsaturated dicarboxylic anhydride,
$c_3$) at least one cyclic, $\alpha,\beta$-unsaturated dicarboximide,
$c_4$) if required, at least one further monomer copolymerizable with $c_1$ to $c_3$,

with the proviso that the amounts by weight of A, B and C sum to 100% by weight.

**2.** A graft copolymer as claimed in claim 1, obtainable by reacting component A in an amount of from 10 to 75% by weight, component B in an amount of from 10 to 75% by weight and component C in an amount of from 15 to 80% by weight.

**3.** A graft copolymer as claimed in claim 1 to 2, starting from polyarylene ethers A), which have hydroxyl, amino or epoxy groups as reactive terminal groups.

**4.** A graft copolymer as claimed in any of the preceding claims, in which the polyarylene ethers contain repeating units of the formula I

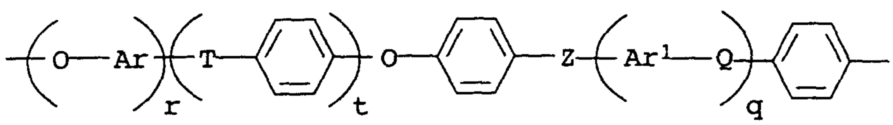 (I),

where r, t and q independently of one another are each 0, 1, 2 or 3,

T, Q and Z are identical or different and, independently of one another may each be a chemical bond or a group selected from -O-, -S-, $-SO_2-$,

>S=O, >C=O,

-N=N-, $-R^aC=CR^b-$ and $-CR^cR^d-$, with the proviso that at least one of the groups T, Q and Z is $-SO_2-$ or C=O,

$R^a$ and $R^b$ are each hydrogen or $C_1$-$C_{10}$-alkyl, $R^c$ and $R^d$ are each hydrogen, $C_1$-$C_{10}$-alkyl, $C_1$-$C_{10}$-alkoxy or $C_6$-$C_{18}$-aryl, where the abovementioned groups may each be substituted by fluorine and/or chlorine, and

Ar and $Ar^1$ are each $C_6$-$C_{18}$-arylene, where these groups may furthermore have substituents selected from $C_1$-$C_{10}$-alkyl, $C_6$-$C_{18}$-aryl, $C_1$-$C_{10}$-alkoxy and halogen.

**5.** A graft copolymer as claimed in claim 4, in which the polyarylene ethers A) contain

$a_1$) from 3 to 97 mol% of repeating units $I_1$

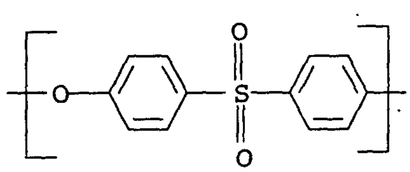 $I_1$

$a_2$) 3 to 97 mol% of repeating units $I_2$

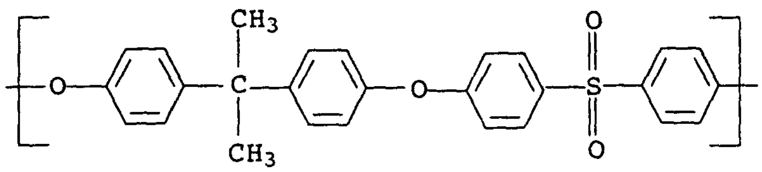

I2

**6.** A graft copolymer as claimed in any of the preceding claims, which contains, as component B a polyamide which is composed of

$b_1$) from 20 to 90% by weight of units derived from terephthalic acid and hexamethylenediamine,
$b_2$) from 0 to 50% by weight of units derived from ε-caprolactam,
$b_3$) from 0 to 80% by weight of units derived from adipic acid and hexamethylenediamine
$b_4$) from 0 to 40% by weight of units derived from further polyamide-forming monomers,

the sum of the amounts by weight of $b_2$, $b_3$ and $b_4$ being at least 10% by weight and not more than 80% by weight.

**7.** A graft copolymer as claimed in any of claims 1 to 5, which contains, as component B, an amorphous polyamide which is composed of

from 40 to 100% by weight of units derived from isophthalic acid and hexamethylenediamine and
from 0 to 60% by weight of units derived from terephthalic acid and hexamethylenediamine.

**8.** A graft copolymer as claimed in any of the preceding claims, in which the copolymers C are composed of

$c_1$) from 20 to 90, preferably from 40 to 80, mol% of aromatic vinyl compounds,
$c_2$) from 1 to 50, preferably from 1 to 35, mol% of cyclic, α,β-unsaturated dicarboxylic anhydrides,
c3) from 9 to 50, preferably from 15 to 50, mol% of cyclic, α,β-unsaturated dicarboximides and
$c_4$) from 0 to 30, preferably from 5 to 35, mol% of further units derived from monomers capable of free radical polymerization.

**9.** A graft copolymer as claimed in any of the preceding claims, in which the copolymer C is composed of units which are derived from

$c_1$) styrene,
$c_2$) maleic anhydride and
$c_3$) N-phenylmaleimide.

**10.** Use of a graft copolymer as claimed in any of claims 1 to 9 for the preparation of thermoplastic molding materials or as a compatibilizer for polymer blends based on polyarylene ethers and polyamides.

**11.** A thermoplastic molding material comprising

(I) at least one graft copolymer as claimed in any of claims 1 to 9,
(II) from 0 to 60% by weight of fibrous or particulate fillers,
(III) from 0 to 45% by weight of rubber impact modifiers and
(IV) from 0 to 40% by weight of additives, such as flameproofing agents, pigments, stabilizers, antistatic agents and processing assistants,

the amounts by weight of components (II) to (IV) being based on the total weight of the molding material.

**12.** A thermoplastic molding material as claimed in claim 11, comprising

(I) from 1 to 30% by weight of at least one graft copolymer as claimed in any of claims 1 to 9,
(II) from 0 to 60% by weight of fibrous or particulate fillers,
(III) from 0 to 45% by weight of rubber impact modifiers,
(IV) from 0 to 40% by weight of additives, such as flameproofing agents, pigments, stabilizers, antistatic agents

and processing assistants,
(V) from 1 to 98% by weight of at least one polyarylene ether without reactive terminal groups and
(VI) from 1 to 98% by weight of at least one thermoplastic polyamide,

the amounts by weight of components (I) to (VI) being based on the total weight of the molding material.

## Revendications

**1.** Copolymères de greffage, que l'on peut obtenir par réaction de:

A) 5 à 85% en poids d'au moins un poly(éther d'arylène) comportant au moins 30% de groupes terminaux réactifs capables de réagir avec les groupes fonctionnels du composant C,
B) 5 à 85% en poids d'au moins un polyamide thermoplastique,
C) 10 à 90% en poids d'au moins un copolymère constitué de:

$c_1$) au moins un composé vinylaromatique,
$c_2$) au moins un anhydride dicarboxylique cyclique $\alpha,\beta$-insaturé, $c_3$) au moins un imide dicarboxylique cyclique $\alpha,\beta$-insaturé,
$c_4$) éventuellement au moins un autre monomère copolymérisable avec $c_1$ à $c_3$,

avec la condition que les pourcentages en poids de A, B et C totalisent 100% en poids.

**2.** Copolymères de greffage selon la revendication 1, que l'on peut obtenir par réaction du composant A à raison de 10 à 75% en poids, du composant B à raison de 10 à 75% en poids, et du composant C à raison de 15 à 80% en poids.

**3.** Copolymères de greffage selon la revendication 1 ou 2, obtenus à partir de poly(éthers d'arylène) A présentant comme groupes réactifs des radicaux hydroxy, amino ou époxy.

**4.** Copolymères de greffage selon l'une des revendications qui précèdent, dans lesquels les poly(éthers d'arylène) contiennent des unités répétitives de la formule générale I,

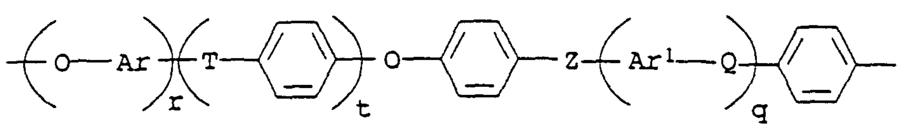
(I),

dans laquelle r, t et q ont à chaque fois et indépendamment l'un de l'autre une valeur de 0, 1, 2 ou 3,

T, Q et Z sont identiques ou différents et peuvent représenter à chaque fois, indépendamment l'un de l'autre, une liaison chimique ou un radical choisi parmi -O-, -S-, $-SO_2-$,

S=O, C=O,

-N = N -, $-R^aC = CR^b$ et $-CR^cR^d-$, avec la condition qu'au moins l'un des groupes T, Q ou Z représente $-SO_2-$ ou C=O,
$R^a$ et $R^b$ représentent à chaque fois un atome d'hydrogène ou un radical alkyle en $C_1$ à $C_{10}$, $R^c$ et $R^d$ représentent à chaque fois un atome d'hydrogène ou un radical alkyle en $C_1$ à $C_{10}$, alcoxy en $C_1$ à $C_{10}$ ou aryle en $C_6$ à $C_{18}$, les radicaux précités pouvant à chaque fois être substitués par des atomes de fluor et/ou de chlore,
Ar et $Ar^1$ représentent des radicaux aryle en $C_6$ à $C_{18}$, ces radicaux pouvant en outre présenter des substituants choisis parmi des radicaux alkyle en $C_1$ à $C_{10}$, aryle en $C_6$ à $C_{18}$, alcoxy en $C_1$ à $C_{10}$ et des atomes d'halogène.

**5.** Copolymères de greffage selon la revendication 4, dans lesquels les poly(éthers d'arylène) A contiennent:

$a_1$) de 3 à 97% molaires d'unités répétitives $I_1$

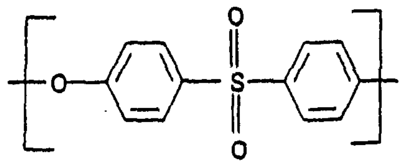

$I_1$

$a_2$) de 3 à 97% molaires d'unités répétitives $I_2$

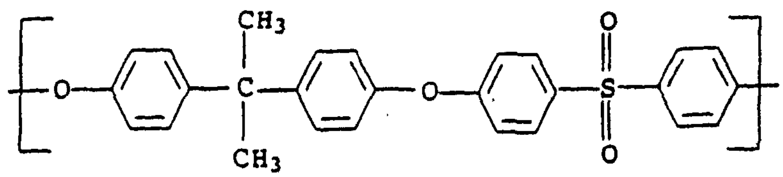

$I_2$

**6.** Copolymères de greffage selon l'une des revendications qui précèdent, contenant en tant que composant B un polyamide constitué de:

$b_1$) 20 à 90% en poids d'unités dérivées de l'acide téréphtalique et de l'hexaméthylènediamine
$b_2$) 0 à 50% en poids d'unités dérivées du ε-caprolactame,
$b_3$) 0 à 80% en poids d'unités dérivées de l'acide adipique et de l'hexaméthylènediamine,
$b_4$) 0 à 40% en poids d'unités dérivées d'autres monomères formant un polyamide,

la somme des pourcentages en poids de $b_2$, $b_3$ et $b_4$ étant égale à 10% en poids minimum et 80% en poids maximum.

**7.** Copolymères de greffage selon l'une des revendications 1 à 5, contenant en tant que composant B un polyamide amorphe constitué de

40 à 100% en poids d'unités dérivées de l'acide isophtalique et de l'hexaméthylènediamine, et
0 à 60% en poids d'unités dérivées de l'acide téréphtalique et de l'hexaméthylènediamine.

**8.** Copolymères de greffage selon l'une des revendications qui précèdent, dans lesquels les copolymères C sont constitués de:

$c_1$) 20 à 90% molaires, de préférence 40 à 80% molaires, de composés vinylaromatiques,
$c_2$) 1 à 50% molaires, de préférence 1 à 35% molaires, d'anhydrides dicarboxyliques cycliques α-β-insaturés
$c_3$) 9 à 50% molaires, de préférence 15 à 50% molaires, d'imides dicarboxyliques cycliques α-β-insaturés et
$c_4$) 0 à 30% molaires, de préférence 5 à 35% molaires, d'autres unités dérivées de monomères polymérisables par voie radicalaire.

**9.** Copolymères de greffage selon l'une des revendications qui précèdent, dans lesquels le copolymère C est constitué d'unités dérivées de:

$c_1$) styrène
$c_2$) anhydride maléique et
$c_3$) imide N-phénylmaléique.

**10.** Utilisation des copolymères de greffage selon l'une des revendications 1 à 9 pour la production de masses de moulage thermoplastiques ou en tant que médiateurs de compatibilité pour des mélanges de polymères à base de poly(éthers d'arylène) et de polyamides.

**11.** Masses de moulage thermoplastiques contenant

(I) au moins un copolymère de greffage selon l'une des revendications 1 à 9,
(II) de 0 à 60% en poids de charges fibreuses ou particulaires,
(III) de 0 à 45% en poids de caoutchoucs modifiant la résistance aux chocs et
(IV) de 0 à 40% en poids d'additifs tels que des agents d'ignifugation, des pigments, des stabilisateurs, des agents antistatiques, des adjuvants de traitement,

les fractions pondérales des composants (II) à (IV) étant ramenées au poids total de la masse de moulage.

**12.** Masses de moulage thermoplastiques selon la revendication 11, comprenant:

(I) de 1 à 30% en poids d'au moins un copolymère de greffage selon l'une des revendications 1 à 9,
(II) de 0 à 60% en poids de charges fibreuses ou particulaires,
(III) de 0 à 45% en poids de caoutchoucs modifiant la résistance aux chocs,
(IV) de 0 à 40% en poids d'additifs tels que des agents d'ignifugation, des pigments, des stabilisateurs, des agents antistatiques, des adjuvants de traitement,
(V) de 1 à 98% en poids d'au moins un poly(éther d'arylène) sans groupes terminaux réactifs,
(VI) de 1 à 98% en poids d'au moins un polyamide thermoplastique, les fractions pondérales des composants (I) à (VI) étant ramenées au poids total de la masse de moulage.